# EUROPEAN PATENT SPECIFICATION

(11) **EP 0 997 407 B1**
(45) Date of publication and mention of the grant of the patent: **28.04.2004**
(21) Application number: 99440288.1
(22) Date of filing: 22.10.1999
(51) Int. Cl.: B65G 47/76

(54) **Dumped stop device for items fastly advanced on metallic trays or the like**
Deponie-Stopp Vorrichtung für schnell geförderte Gegenstände mittels metallischer Schalen oder dergleichen
Dispositif d'arrêt de décharge pour articles transportés à vitesse élévée sur des plateaux métalliques ou similaires

(30) Priority: 27.10.1998 IT MI982294
(43) Date of publication of application: 03.05.2000
(73) Proprietor: ALCATEL, 75008 Paris (FR)
(72) Inventor: Campanelli, Ignazio, 64100 Teramo (IT); Passero, Adolfo, 81100 Caserta (IT); Cuomo, Antonio, 81024 Maddaloni (Caserta) (IT); Reali, Lanfranco, 64010 Villa Lempa (Teramo) (IT)
(74) Representative: Lamoureux, Bernard

(56) References cited:
- EP-A- 0 687 628
- US-A- 4 711 357
- US-A- 5 655 643
- PATENT ABSTRACTS OF JAPAN vol. 1996, no. 05, 31 May 1996 (1996-05-31) & JP 08 020429 A (TOYO KANETSU KK), 23 January 1996 (1996-01-23)

## Description

The present invention generally relates to the fast conveyance of items on metallic trays or the like and, in particular, it concerns a dumped stop device for stopping the conveyed items or sorting them into various containers according to the needs.

In systems for sorting items or packages carried on fast advancing metallic trays, the problem often arises as to how such items have to come to rest and be softly and orderly discharged into appropriate item collecting containers. Naturally, during the tray unloading operation, it is necessary to avoid by all means the permanent deformation of the items. In other words, it is necessary to prevent packages (generally made of cardboard) from becoming damaged, on the one hand, because they sometimes contain fragile articles and, on the other hand, because such damage makes packages aesthetically unpleasant and, frequently, even commercially unacceptable.

Currently-used systems, such as for example that shown on EP-A-0687628, are "angled rigid impact" systems, i.e. the fast advancing articles are stopped by rigid plates and discharged laterally by exploiting the side component of their momentum or by friction with a rotating belt. Such systems do not damp the motion of the package smoothly but, on the contrary, they stop it abruptly, often deforming it permanently and sometimes breaking the fragile articles contained therein. Moreover, the rigid impact systems drop the packages into the appropriate containers abruptly, still running the risk of breaking the package content, and disorderly, thus wasting the available room inside the containers.

Systems based on fluidodynamic damping or mechanical damping through mechanical springs are also known, but such systems are very sensitive to the environmental conditions and especially to the operative temperature.

In view of the prior art drawbacks mentioned above, it is the main object of the present invention to provide a dumped stop device for items fast advancing on metallic trays or the like which is able to smoothly stop the motion of the items without deforming it or breaking its content and to drop it orderly into appropriate containers.

This and further objects are achieved by the device according to the present invention having the characteristics set forth in claim 1 which is deemed an integral part of the present description. Further advantageous characteristics of the invention are set forth in the dependent claims which are also an integral part of the present description.

The device according to the present invention allows the kinetic energy of the advancing item to be gradually dissipated over a stop distance proportional to the mass of the item itself. All this is obtained through two dumping levels, the first one acting on items having a weight below a certain value, e.g. two kilograms, the second one acting on items having a weight exceeding such value and therefore, the speed being equal, a greater kinetic energy.

The invention will certainly become apparent after having read the following detailed description, given by way of a pure non limiting example thereof and to be read with reference to the attached illustrative drawings in which the various figures show:
- Fig. 1 shows, through a partially section front view, the device according to the invention when in use;

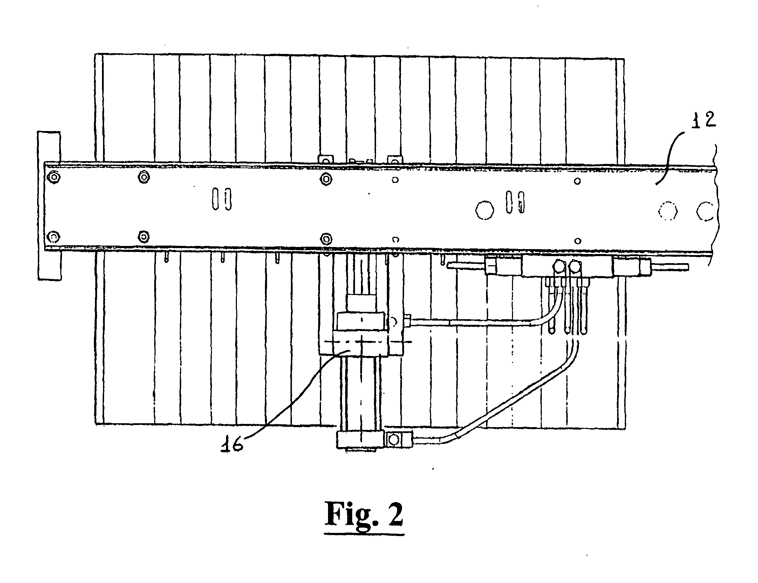

- Fig. 2 shows, in a top plan view, the same device of Fig. 1;

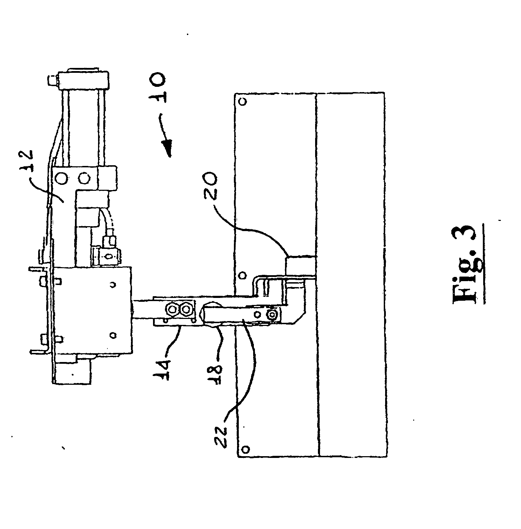

- Fig. 3 shows, in a side view, the same device of Fig. 1; and
- Fig. 4 shows the same device of Fig. 1 in a perspective view.

Naturally, identical reference numerals will be used throughout the several figures to designate the same components or functionally equivalent parts.

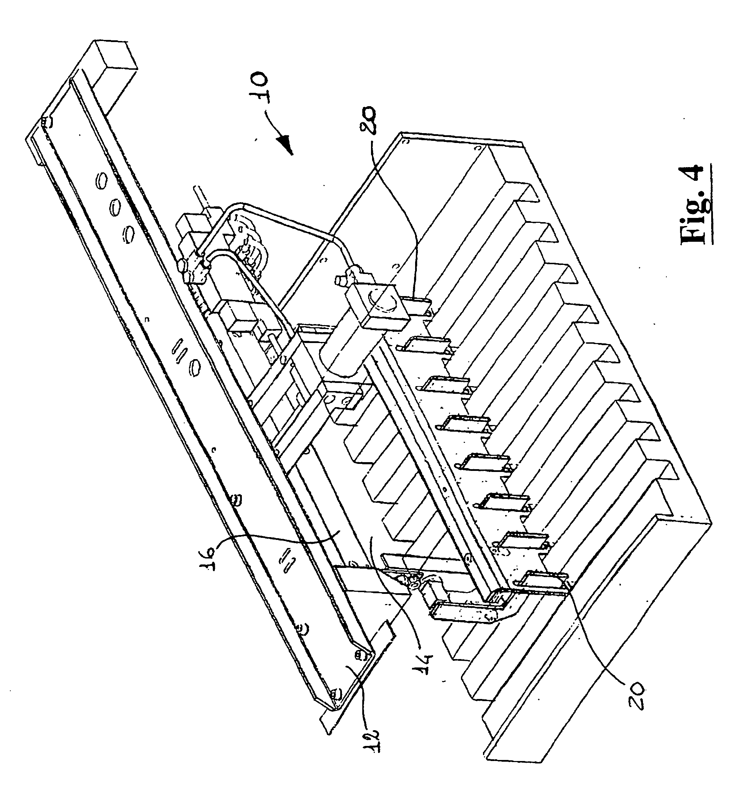

Referring now to the various figures, in particular to Fig. 4, it will be easily appreciated that the device 10 of the invention, overhung to a supporting beam 12, comprises a plate 14 rotatable one-quarter turn (90°) about a shaft 16 actuated, through appropriate leverage, by an actuator cylinder or the like. The plate 14 is generally in a horizontal and raised position (thus allowing the carried items to freely travel thereunder) but it is rotated one-quarter turn downwards when it is to act as a stop device so that the package (not shown) impacting it, is thrown off the metallic tray and falls into appropriate containers (not shown). The plate 14 is further provided with one or more pushers 20 retractable with respect to the plate and mounted on elastic supports made of rubber or the like. Such retractable pushers (generally termed "first dumping means") constitute the first dumping level, effective to damp all the kinetic energy of relatively lightweight packages, i.e. having a weight below a first value, e.g. two kilograms. The same retractable pushers 20 operate together with second dumpining means, which will be described later on, to obtain the overall shock absorbing of heavier items provided, therefore, with greater kinetic energy.

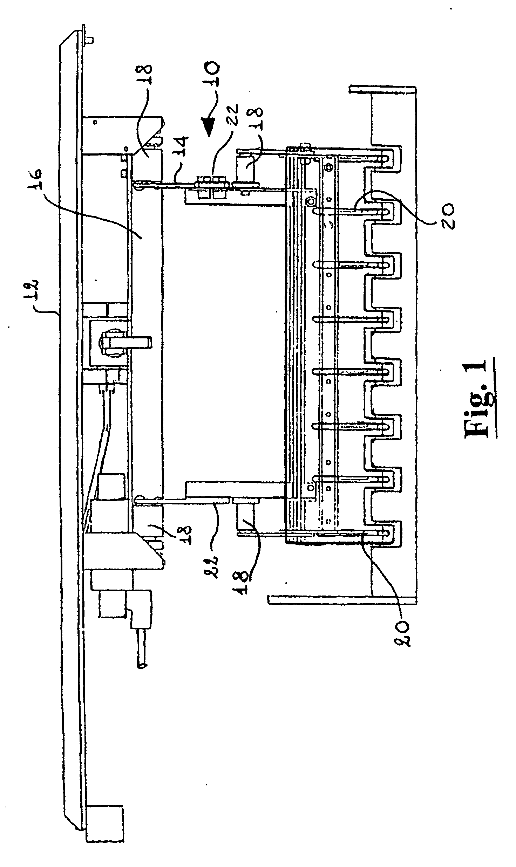

The second dumping means comprise two elastically hinged levers 22 connecting the plate 14 to the drive shaft 16 of the plate itself. For the shock absorbing, the elastic deformation of the rubber of the hinge 18 is exploited when the latter is twistly stressed by the plate through the levers. Preferably, as clearly shown in Fig. 1, two pairs of rubber elastic torsion springs 18 are provided.

In practice, when a package travelling at a certain speed, and therefore with a certain kinetic energy, impacts the lowered plate, it firstly comes into contact with the retractable pushers 20 that are able to damp the kinetic energy up to a certain relatively low value and afterwards, in the case where the kinetic energy has not been fully absorbed, it pushes against the plate 14 and buckles elastically the rubber at the hinge 18 that deaden the crash. The impact, as will be apparent, occurs backwardly.

As mentioned above, the device in accordance with the invention allows the energy of the advancing item to be gradually dissipated over a stop distance proportional to the mass of the item itself. The device consequently prevents the item from being damaged during the impact and allows it to be laid down into the appropriate container without bunching, and therefore it allows the items to be orderly stacked to the advantage of the exploitation of the room at disposal. Among the intrinsic advantages of the invention are the wide temperature range in which the device is able to operate (-50° to + 50°C, in contrast with the known devices operating with metallic springs or fluid-dynamic systems), its low cost, the energy saving and the wide range of sortable articles.

## Claims

1. Device (10) for stopping or sorting items carried on trays or the like, comprising a stop plate (14) rotatable from a raised position, in which the carried items travel thereunder, to a lowered position, substantially transverse to the advancing direction of the items, in which it is impacted by the carried items, **characterized in that**
said rotatable stop plate (14) comprises dumping means (18, 20, 22) being elastically retractable with respect to the stop plate, to gradually stop the carried items over a stop distance proportional to the mass thereof.

2. Device according to claim 1, **characterized in that** said dumping means (18, 20, 22) comprise first dumping means (20) and second dumping means (18, 22), said first dumping means (20) stopping items having a weight not exceeding a certain pre-established value, said second dumping means (18, 22), cooperating with said first dumping means (20), stopping items having weight exceeding said pre-established value.

3. Device according to claim 2, **characterized in that** said first dumping means (20) comprise one or more pushers (20).

4. Device according to claim 2 or 3, **characterized in that** said second dumping means (18, 22) comprise at least one elastically hinged lever (22) connecting the plate (14) to the drive shaft (16) of the plate itself.

5. Device according to claim 4, **characterized in that** for each of said elastically hinged levers (22) a pair of elastic torsion springs (18) is provided, said torsion springs being made of a spring back material, preferably rubber.

## Patentansprüche

1. Verfahren (10), das die auf Bretter oder Ähnliche transportierten Artikeln stoppt oder auswählt und eine Anhaltsplatte (14) enthält, die sich von einer erhöhten Position, wo die transportierten Artikeln darunter laufen, zu einer niedrigen Position dreht, die ziemlich quer zur Vorschubsrichtung der Artikeln läuft, wo sie von den transportierten Artikeln angestoßen wird, **dadurch gekennzeichnet, daß** die drehende Anhaltsplatte Auslademittel (18, 20, 22) enthält, die in Bezug auf die Anhaltsplatte elastisch einziehbar sind und die die transportierten Artikeln über eine gewisse Entfernung, die zu deren Masse proportional ist, stufenweise unterbricht.

2. Verfahren nach Anspruch 1, **dadurch gekennzeichnet, daß** die Auslademittel (18, 20, 22) die ersten (20) und zweiten Auslademittel (18, 22) enthalten, daß die ersten Auslademittel die Artikeln stoppen müssen, die einen Gewicht haben, das nicht einen bestimmten festgesetzten Wert überschreitet, und daß die zweiten Auslademittel (18, 22) mit den ersten Auslademittel (20) zusammenarbeiten, um die Artikeln zu stoppen, die einen Gewicht haben, das den festgesetzten Wert überschreitet.

3. Verfahren nach Anspruch 2, **dadurch gekennzeichnet, daß** die ersten Auslademittel (20) einen oder mehreren Schieber (20) enthalten.

4. Verfahren nach Anspruch 2 oder 3, **dadurch gekennzeichnet, daß** die zweiten Auslademittel (18, 22) mindestens einen elastischen hängenden Hebel (22) enthalten müssen, der die Platte (14) mit der Antriebswelle (16) der Platte selbst verbindet.

5. Verfahren nach Anspruch 4, **dadurch gekennzeichnet, daß** alle elastischen hängenden Hebeln (22) mit einem Paar elastischer Drehfedern (18) versehen sind, und die Drehfedern aus gedehntem Material gemacht sein müssen, am besten aus Gummi.

## Revendications

1. Dispositif (10) pour bloquer ou trier des articles mis sur des plateaux ou systèmes similaires, comprenant une plaque d'arrêt (14), pivotant depuis une position relevée sous laquelle passent les articles transportés, jusqu'à une position abaissée, sensiblement perpendiculaire au sens de circulation des articles, dans laquelle elle est percutée par les articles transportés, **caractérisé en ce que** ladite plaque d'arrêt pivotante (14) comporte des moyens de déchargement (18, 20, 22) rétractables de façon élastique par rapport à la plaque d'arrêt, permettant d'arrêter graduellement les articles transportés sur une distance d'arrêt proportionnelle à leur masse.

2. Dispositif selon la revendication 1, **caractérisé en ce que** lesdits moyens de déchargement (18, 20, 22) comportent un premier moyen de déchargement (20) et un second moyen de déchargement (18, 22), ledit premier moyen de déchargement (20) arrêtant les articles d'un poids inférieur à une valeur préétablie, ledit second moyen de déchargement (18, 22), en coopération avec ledit premier moyen de déchargement (20), arrêtant les articles ayant un poids dépassant ladite valeur préétablie.

3. Dispositif selon la revendication 2, **caractérisé en ce que** ledit premier moyen de déchargement (20) comporte un ou plusieurs poussoirs (20).

4. Dispositif selon la revendication 2 ou 3, **caractérisé en ce que** ledit second moyen de déchargement (18, 22) comporte au moins un levier à basculement élastique (22) reliant la plaque (14) à l'arbre d'entraînement (16) de la plaque elle-même.

5. Dispositif selon la revendication 4, **caractérisé en ce que** soit fournie pour chacun des leviers à basculement élastique (22) une paire de ressorts de torsion élastiques (18), lesdits ressorts de torsion étant fabriqués en un matériau à retour élastique, de préférence du caoutchouc.
